# EUROPEAN PATENT APPLICATION

(11) **EP 4 821 887 A1**
(43) Date of publication of application: **14.10.2026**
(21) Application number: 26169406.1
(22) Date of filing: 31.03.2026
(51) Int. Cl.: C01D 7/00, C22B 26/00, H01M 4/58, H01M 4/505, H01M 4/525, H01M 10/54

(54) **RECYCLED LITHIUM CARBONATES, POSITIVE ELECTRODE ACTIVE MATERIALS, AND RECHARGEABLE LITHIUM BATTERIES**

(30) Priority: 04.04.2025 KR 20250044238
(71) Applicant: SAMSUNG SDI CO., LTD., Yongin-si, Gyeonggi-do 17084 (KR)
(72) Inventor: Maeng, Seokju, 17084 Yongin-si, Gyeonggi-do (KR)
(74) Representative: Meissner Bolte Partnerschaft mbB

(57) **Abstract**

A recycled lithium carbonate has an L value of about 96.5 to about 100.8 according to a colorimetric system, and a b value of about 0.2 to about 3.0 according to a colorimetric system. The recycled lithium carbonate may be used in a positive electrode active material for a rechargeable lithium battery.

## Description

### BACKGROUND

### 1. Field

Recycled lithium carbonates, positive electrode active materials, and rechargeable lithium batteries are disclosed.

### 2. Description of the Related Art

Portable information devices such as cell phones, laptops, smart phones, and the like, use rechargeable lithium batteries as power sources. Rechargeable lithium batteries with high energy density are also used as driving power sources or power storage power sources for hybrid or electric vehicles.

A rechargeable lithium battery includes a positive electrode and a negative electrode including an active material capable of intercalating and deintercalating lithium ions, and an electrolyte solution. Electrical energy is produced through oxidation and reduction reactions when lithium ions are intercalated/deintercalated from the positive electrode and negative electrode.

Transition metal compounds such as lithium cobalt-based oxide, lithium nickel-based oxide, and lithium manganese-based oxide are used as positive electrode active materials for rechargeable lithium batteries. Crystalline carbon materials such as natural graphite or artificial graphite or amorphous carbon materials are used as negative electrode active materials.

### SUMMARY

The present invention provides a method of quickly determining whether a battery-grade recycled lithium carbonate is suitable for battery manufacturing by quickly measuring and analyzing the carbonate without separate pretreatment, and by using a positive electrode active material prepared using recycled lithium carbonate in the manufacture of a rechargeable lithium battery having improved overall performance.

The present invention provides a recycled lithium carbonate having an L value of about 96.5 to about 100.8 according to a colorimetric system and a b value of 0.2 to 3.0 according to a colorimetric system.

The present invention provides a positive electrode active material prepared using the aforementioned recycled lithium carbonate.

Thus, the present invention also provides the use of the claimed recycled lithium carbonate for preparing a positive electrode active material.

The present invention provides a rechargeable lithium battery including a positive electrode including the aforementioned positive electrode active material, a negative electrode, and an electrolyte.

According to the invention, it is possible to quickly determine whether a lithium carbonate is battery-grade recycled lithium carbonate suitable for battery manufacturing by quickly measuring and analyzing the carbonate without separate pretreatment or requiring a lot of time. By using the positive electrode active material prepared with the recycled lithium carbonate in the manufacture of a rechargeable lithium battery, the overall performance of the battery can be improved.

### BRIEF DESCRIPTION OF THE DRAWINGS

FIGS. 1 to 4 are views schematically showing rechargeable lithium batteries according to embodiments.
FIG. 5 is a photograph of the recycled lithium carbonate obtained in Example 1, taken with a scanning electron microscope (SEM) at a magnification of 20,000 times.
FIG. 6 is a photograph of the recycled lithium carbonate obtained in Comparative Example 1, taken with a scanning electron microscope (SEM) at a magnification of 20,000 times.
FIG. 7 is a photograph of the recycled lithium carbonate obtained in Comparative Example 2, taken with a scanning electron microscope (SEM) at a magnification of 20,000 times.
FIG. 8 is a photograph of the recycled lithium carbonate obtained in Example 1, taken with a scanning electron microscope (SEM) at a magnification of 7,200 times.
FIG. 9 is a photograph of the recycled lithium carbonate obtained in Comparative Example 1, taken with a scanning electron microscope (SEM) at a magnification of 7,200 times.
FIG. 10 is a photograph of the recycled lithium carbonate obtained in Comparative Example 2, taken with a scanning electron microscope (SEM) at a magnification of 7,200 times.
FIG. 11 shows the results of X-ray Diffraction XRD (XRD) analysis performed on the recycled lithium carbonate obtained in Example 1.
FIG. 12 shows the results of measuring the discharge capacity retention rates according to the progress of 30 cycles for the rechargeable lithium battery cells made in Example 1 and Comparative Examples 1 and 2.

### DETAILED DESCRIPTION

Hereinafter, specific embodiments will be described in detail so that those of ordinary skill in the art can easily implement them. However, this disclosure may be embodied in many different forms and is not limited to the example embodiments set forth herein.

The terminology used herein is used to describe embodiments only and is not intended to limit the present disclosure. A singular expression includes a plural expression unless the context clearly dictates otherwise.

As used herein, "combination thereof" means a mixture, a laminate, a composite, a copolymer, an alloy, a blend, a reaction product, and the like of the constituents.

Here, it should be understood that terms such as "comprises," "includes," or "have" designate the presence of an embodied feature, number, step, element, or a combination thereof, but do not preclude the possibility of the presence or addition of one or more other features, number, step, element, or a combination thereof.

In the drawings, the thickness of layers, films, panels, regions, etc., may be exaggerated for clarity and like reference numerals designate the same elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

Herein, "or" is not to be construed as an exclusive meaning, for example, "A or B" is construed to include A, B, A+B, and the like.

"Metal" includes ordinary metals, transition metals and metalloids.

"Thickness" may be measured, for example, from photographs taken with an optical microscope or a scanning electron microscope.

As used herein, when a definition is not otherwise provided, the particle diameter may be an average particle diameter. In addition, the particle diameter may refer to an average particle diameter (D₅₀), which means the diameter of particles having a cumulative volume of 50 vol% in the particle size distribution. The average particle diameter (D₅₀) may be measured by a method well known to those skilled in the art, for example, by a particle size analyzer, or by a transmission electron microscope image, or a scanning electron microscope image. Alternatively, a dynamic light-scattering measurement device is used to perform a data analysis, and the number of particles is counted for each particle size range. From this, the average particle diameter (D₅₀) value may be easily obtained through a calculation. Alternatively, the average particle diameter can be measured using a laser diffraction method. When measuring by the laser diffraction method, the particles to be measured are dispersed in a dispersion medium, and then introduced into a commercially available laser diffraction particle diameter measuring device (e.g., Microtrac MT 3000), and ultrasonic waves of about 28 kHz with an output of 60 W are irradiated to calculate an average particle diameter (D₅₀) on the basis of 50% of the particle diameter distribution in the measuring device.

In this specification, the weight average molecular weight (Mw) may be a value measured using gel permeation chromatography (GPC).

### Recycled Lithium Carbonate

Embodiments of the present disclosure provide recycled lithium carbonate having an L value of about 96.5 to about 100.8 according to a colorimetric system, a b value of 0.2 to 3.0 according to a colorimetric system.

Because of excellent characteristics such as high energy density, high voltage, long cycle-life and long storage life, rechargeable lithium batteries are used in a wide range of applications, from portable devices to energy storage systems and electric vehicles In particular, with the recent increase in demand for electric vehicles, the demand for rechargeable lithium batteries is also rapidly increasing.

As demand for rechargeable lithium batteries increases, the amount of waste generated from rechargeable battery material processes also increases. In addition, the performance of rechargeable lithium batteries deteriorates as charging and discharging are repeated, so the amount of waste from used rechargeable lithium batteries is expected to continue to increase.

Various attempts are being made to recycle the materials used in rechargeable lithium batteries. These recycled materials include valuable metals such as nickel, copper, aluminum, cobalt, manganese, and lithium. Among these, lithium is subject to significant price volatility due to its limited supply chain and the rapid increase in demand for rechargeable lithium batteries. Therefore, attempts have been made to recycle lithium by converting it into lithium carbonate (Li₂CO₃) or lithium hydroxide (LiOH) and then using the lithium carbonate or lithium hydroxide to synthesize a lithium metal oxide such as a lithium cobalt oxide, a lithium nickel oxide, a lithium nickel-cobalt-manganese oxide, and the like.

Previously, the determination of recycled lithium carbonate has been based on a purity of the recycled lithium carbonate. If a positive electrode active material is synthesized using low-purity recycled lithium carbonate, the performance and stability of the rechargeable lithium battery may be reduced due to the impurities.

Equipment and methods such as inductively coupled plasma spectroscopy (ICP), atomic absorption spectroscopy (AA), and titrimetric analysis have been used to analyze the purity of recycled lithium carbonate. But these methods take a lot of time and requiring a separate pretreatment process to analyze the purity of recycled lithium carbonate.

In embodiments of the present disclosure, the presence of impurity components may be located at the lithium site (Li site) of the synthesized positive electrode. This may lead to the ability to improve the electrochemical performance, resulting in superior performance and stability compared to a positive electrode synthesized with ultra-high purity lithium carbonate. The detection of some of the impurity components in this regard may be based on changes in the color of the recycled lithium carbonate.

For example, some embodiments of the present disclosure provide recycled lithium carbonate in which the L value and b value according to a colorimetric system are precisely controlled within a specific range. Through this, it is possible to quickly measure, analyze, and determine whether a material is battery-grade recycled lithium carbonate suitable for battery manufacturing. By using the positive electrode active material prepared using this recycled lithium carbonate in the manufacture of rechargeable lithium batteries, the overall performance of the batteries may be improved.

In some embodiments, the recycled lithium carbonate has an L value according to a colorimetric system of about 96.5 to about 100.8, for example, about 96.8 to about 100, about 97 to about 99, or about 97.5 to about 98. Further, the recycled lithium carbonate according to some example embodiments has a b value according to a colorimetric system of about 0.2 to about 3.0, for example, about 0.23 to about 2.5, about 0.25 to about 2.0, about 0.5 to about 2.0, about 0.7 to about 2.0, or about 1.0 to about 1.9. By satisfying these ranges, it is possible to quickly determine whether a material is battery-grade recycled lithium carbonate without a long analysis or separate pretreatment. By using a positive electrode active material prepared withsuch recycled lithium carbonate in a rechargeable lithium battery, the overall performance, including charge/discharge characteristics and cycle-life characteristics of the battery may be improved.

Herein, the L value and b value according to the colorimetric system are color coordinates according to the colorimetric system of CIELAB (CIE 1976 L*a*b*), where the L value represents brightness and the b value represents the degree of blue-yellow.

Herein, XRD (X-ray diffraction) analysis may be conducted by using an X-ray diffraction analyzer (for example SmartLab by Rigaku Corporation) with Cu-Kα radiation (λ = 1.5406 Å) under conditions of a voltage of 40 kV and a current of 30 mA. The XRD (X-ray diffraction) analysis may be conducted over a range of 2θ = 10 ° to 70 °, e.g. with a step size of 0.02 ° at a scan speed of 2 °/min.

Recycled lithium carbonate may contain impurities. Such impurities may be positioned at lithium sites and contribute to improving electrochemical performance. Examples of such impurities include elements such as Na, K, Ca, Mg, Al, Si, Fe, or a combination thereof. In some examples of the recycled lithium carbonate, a total amount of the impurities may be about 0.1 wt% to about 0.5 wt%, about 0.1 wt% to about 0.4 wt%, about 0.1 wt% to about 0.35 wt%, about 0.1 wt% to about 0.3 wt%, about 0.1 wt% to about 0.25 wt%, or about 0.2 wt% to about 0.25 wt%. Within these ranges, the presence of impurity components in the recycled lithium carbonate may contribute to improved electrochemical performance.

The impurity in the recycled lithium carbonate may include Na, and an amount of Na may be less than or equal to about 0.30 wt% (including 0 wt%), about 0.005 wt% to about 0.30 wt%, about 0.1 wt% to about 0.30 wt%, or about 0.15 wt% to about 0.25 wt%. Within these ranges, electrochemical performance of a battery including the recycled lithium carbonate may be improved.

In another example, an amount of K in the recycled lithium carbonate may be less than or equal to about 0.01 wt% (including 0 wt%), about 0.001 wt% to about 0.008 wt%, about 0.001 wt% to about 0.005 wt%, or about 0.002 wt% to about 0.004 wt%. Within these ranges, the stability of a rechargeable lithium battery may be improved by suppressing side reactions with the electrolyte in the rechargeable lithium battery.

In still other examples of the recycled lithium carbonate, the amount of Ca may be less than or equal to about 0.05 wt% (including 0 wt%), about 0.005 wt% to about 0.03 wt%, or about 0.01 wt% to about 0.02 wt%. In these ranges, the Ca may contribute to stably securing initial capacity and cycle-life characteristics by reducing distortion of the crystal structure of the positive electrode active material and hindrance of diffusion of lithium ions.

In further examples, the impurities of the recycled lithium carbonate may include Mg, and an amount of Mg may be less than or equal to about 0.03 wt% (including 0 wt%), about 0.001 wt% to about 0.03 wt%, about 0.002 wt% to about 0.025 wt%, about 0.002 wt% to about 0.02 wt%, about 0.003 wt% to about 0.015 wt%, or about 0.004 wt% to about 0.01 wt%. Within these ranges, electrochemical performance may be improved in a battery that includes the recycled lithium carbonate.

In still further examples of the recycled lithium carbonate, an amount of Al may be less than or equal to about 0.01 wt% (including 0 wt%), about 0.0001 wt% to about 0.009 wt%, about 0.0001 wt% to about 0.005 wt%, or about 0.0001 wt% to about 0.003 wt%. Within these ranges, the formation of inactive particles and reduction in conductivity in the positive electrode active material may be prevented, with the output performance and charge/discharge performance of a rechargeable lithium battery thereby being improved.

In some examples, in the recycled lithium carbonate, an amount of Si may be less than or equal to about 0.01 wt% (including 0 wt%), about 0.001 wt% to about 0.01 wt%, about 0.001 wt% to about 0.009 wt%, or about 0.002 wt% to about 0.008 wt%. Within these ranges, an increase in interfacial resistance within the positive electrode active material may be prevented, and the electrochemical performance and output characteristics of the electrode may be improved.

For other examples of the recycled lithium carbonate, an amou t of Fe may be less than or equal to about 0.005 wt% (including 0 wt%), about 0.0001 wt% to about 0.005 wt%, about 0.0001 wt% to about 0.003 wt%, about 0.0002 wt% to about 0.002 wt%, about 0.0003 wt% to about 0.001 wt%, or about 0.0004 wt% to about 0.0009 wt%. Within these ranges, cycle-life and output characteristics of rechargeable lithium batteries may be effectively improved by maintaining electronic conductivity and reducing electrochemical deterioration.

For example, the recycled lithium carbonate may include elements such as Na, Ca, Mg, Al, Fe, or a combination thereof as impurities. As specific examples of the recycled lithium carbonate, an amount of Na may be less than or equal to about 0.30 wt% (including 0 wt%), about 0.005 wt% to about 0.30 wt%, about 0.1 wt% to about 0.30 wt%, or about 0.15 wt% to about 0.25 wt%, an amount of Ca may be less than or equal to about 0.05 wt% (including 0 wt%), about 0.005 wt% to about 0.03 wt%, or about 0.01 wt% to about 0.02 wt%, an amount of Mg may be less than or equal to about 0.03 wt% (including 0 wt%), about 0.001 wt% to about 0.03 wt%, about 0.002 wt% to about 0.025 wt%, about 0.002 wt% to about 0.02 wt%, about 0.003 wt% to about 0.015 wt%, or about 0.004 wt% to about 0.01 wt%, an amount of Al may be less than or equal to about 0.01 wt% (including 0 wt%), about 0.0001 wt% to about 0.009 wt%, about 0.0001 wt% to about 0.005 wt%, or about 0.0001 wt% to about 0.003 wt%, and an amount of Fe may be less than or equal to about 0.005 wt% (including 0 wt%), about 0.0001 wt% to about 0.003 wt%, about 0.0002 wt% to about 0.002 wt%, about 0.0003 wt% to about 0.001 wt%, or about 0.0004 wt% to about 0.0009 wt%.

The recycled lithium carbonate may have a plate-shaped particle form. By using a precipitation method to recover lithium from waste rechargeable lithium batteries, the recycled lithium carbonate may have a plate-like particle form with crystals growing flat in a specific direction.

The average particle diameter D₅₀ of the recycled lithium carbonate may be about 2 µm to about 45 µm, about 4 µm to about 45 µm, about 4 µm to about 40 µm, or about 4 µm to about 30 µm. Within these ranges, electrochemical performance with the recycled lithium carbonate may be improved.

In some examples, the recycled lithium carbonate may be as set forth in Equation 1. If this equation is satisfied, the electrochemical performance may be improved, and when the positive electrode active material prepared using the recycled lithium carbonate is used in a rechargeable lithium battery, the overall performance, including charge/discharge characteristics and cycle-life characteristics, may be improved. [Equation 1] ${I}_{\left(110\right)} \leq {I}_{\left(002\right)}$

In Equation 1, I₍₁₁₀₎ represents a maximum peak intensity at 2θ = 21±0.5° when measured by XRD of CuKα, and I₍₀₀₂₎ represents a maximum peak intensity measured at 2θ = 31.5±0.5° when measured by XRD of CuKα.

In other examples, the recycled lithium carbonate may satisfy Equation 2. If this equation is satisfied, the electrochemical performance may be improved, and the overall performance including charge/discharge characteristics and cycle-life characteristics may be improved when the positive electrode active material prepared with the recycled lithium carbonate is used in a rechargeable lithium battery. [Equation 2] ${I}_{\left(202\right)} \leq {I}_{\left(110\right)}$

In Equation 2, I₍₂₀₂₎ represents a maximum peak intensity measured at 2θ = 30.5±0.4° when measured by XRD of CuKα, and I₍₁₁₀₎ represents a maximum peak intensity at 2θ = 21±0.5° when measured by XRD of CuKα.

In other examples, the recycled lithium carbonate may satisfy Equation 3. If this equation is satisfied, the electrochemical performance may be improved, and when the positive electrode active material prepared using the recycled lithium carbonate is used in a rechargeable lithium battery, the overall performance, including charge/discharge characteristics and cycle-life characteristics, may be excellent. [Equation 3] ${I}_{\left(202\right)} \leq {I}_{\left(002\right)}$

In Equation 3, I₍₂₀₂₎ represents a maximum peak intensity at 2θ = 30.5±0.4° when measured by XRD of CuKα, and I₍₀₀₂₎ represents a maximum peak intensity at 2θ = 31.5±0.5° when measured by XRD of CuKα.

For example, the recycled lithium carbonate may satisfy Equation 4. If this equation is satisfied, the electrochemical performance may be improved, and when the positive electrode active material prepared using the recycled lithium carbonate is used in a rechargeable lithium battery, the overall performance, including charge/discharge characteristics and cycle-life characteristics, may be improved. [Equation 4] ${I}_{\left(202\right)} \leq {I}_{\left(110\right)} \leq {I}_{\left(002\right)}$

In Equation 4, I₍₂₀₂₎ represents a maximum peak intensity at 2θ= 30.5±0.4° when measured by XRD of CuKα, I₍₁₁₀₎ represents a maximum peak intensity at 2θ = 21±0.5° when measured by XRD of CuKα, and I₍₀₀₂₎ represents a maximum peak intensity measured at 2θ = 31.5±0.5° when measured by XRD of CuKα.

For example, the recycled lithium carbonate may satisfy Equation 5. If this quation is satisfied, the electrochemical performance may be improved, and when the positive electrode active material prepared using the recycled lithium carbonate is used in a rechargeable lithium battery, the overall performance, including charge/discharge characteristics and cycle-life characteristics, can be excellent. [Equation 5] $1.0 \leq {I}_{\left(002\right)} / {I}_{\left(110\right)} \leq 1.17$ In Equation 5, I₍₀₀₂₎ represents a maximum peak intensity at 2θ = 31.5±0.5° when measured by XRD of CuKα, and I₍₁₁₀₎ represents a maximum peak intensity at 2θ = 21±0.5° when measured by XRD of CuKα.

### Positive Electrode Active Material

Example embodiments provide a positive electrode active material prepared using the aforementioned recycled lithium carbonate.

As the positive electrode active material, a compound capable of intercalating and deintercalating lithium (lithiated intercalation compound) may be used. For example, at least one composite oxide of lithium and a metal selected from cobalt, manganese, nickel, and a combination thereof may be used.

The composite oxide may be a lithium transition metal composite oxide. Specific examples include a lithium nickel-based oxide, a lithium cobalt-based oxide, a lithium manganese-based oxide, a lithium iron phosphate-based compound, a cobalt-free lithium nickel-manganese-based oxide, an overlithiated layered oxide, or a combination thereof.

The positive electrode active material may be a high-nickel positive electrode active material in which a nickel content is greater than or equal to about 80 mol% based on 100 mol% of a metal excluding lithium in a lithium transition metal composite oxide. In the high-nickel positive electrode active material, the nickel amount may be greater than or equal to about 85 mol%, greater than or equal to about 90 mol%, greater than or equal to about 91 mol%, or greater than or equal to about 94 mol%, and less than or equal to about 99 mol%, based on 100 mol% of the metal excluding lithium. The high-nickel positive electrode active materials may achieve high capacity and may be applied to high-capacity, high-density rechargeable lithium batteries.

As more specific examples, a compound represented by any one of the following chemical formulas may be used: LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O_{2-α}D_{α} (0.90 ≤ a ≤ 1.8, 0 ≤ b ≤ 0.5, 0 ≤ c ≤ 0.5, 0 < α < 2);LiₐNi_{1-b-c}Mn_{b}X_{c}O_{2-α}D_{α} (0.90 ≤ a ≤ 1.8, 0 ≤ b ≤ 0.5, 0 ≤ c ≤ 0.5, 0 < α < 2);LiₐNi_{b}Co_{c}L¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); LiₐFePO₄ (0.90 ≤ a ≤ 1.8) In these chemical formulas, A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; Q is Ti, Mo, Mn, or a combination thereof; Z is Cr, V, Fe, Sc, Y, or a combination thereof; and L¹ is Mn, Al, or a combination thereof.

The positive electrode active material may include, for example, a lithium nickel-based oxide represented by Chemical Formula 1A, a lithium cobalt-based oxide represented by Chemical Formula 2A, a lithium iron phosphate-based compound represented by Chemical Formula 3A, a cobalt-free lithium nickel-manganese-based oxide represented by Chemical Formula 4A, or a combination thereof.

[Chemical Formula 1A] Liₐ₁Niₓ₁M¹_{y1}M²_{z1}O_{2-b1}X_{b1}

In Chemical Formula 1A, 0.9≤a1≤1.8, 0.3≤x1≤1, 0≤y1≤0.7, 0≤z1≤0.7, 0.9≤x1+y1+z1≤1.1, and 0≤b1≤0.1, M¹ and M² are each independently Al, B, Ba, Ca, Ce, Co, Cr, Cu, Fe, Mg, Mn, Mo, Nb, Si, Sn, Sr, Ti, V, W, Zr, or a combination thereof, and X is F, P, S, or a combination thereof. In further embodiments with Chemical Formula 1A, 0.6≤x1≤1, 0≤y1≤0.4, and 0≤z1≤ 0.4; or 0.8≤x1≤1, 0≤y1≤0.2, and 0≤z1≤0.2.

[Chemical Formula 2A] Liₐ₂Coₓ₂M³_{y2}O_{2-b2}X_{b2}

In Chemical Formula 2A, 0.9≤a2≤1.8, 0.7≤x2≤1, 0≤y2≤0.3, 0.9≤x2+y2≤ 1.1, and 0≤b2≤0.1, M³ is Al, B, Ba, Ca, Ce, Cr, Cu, Fe, Mg, Mn, Mo, Ni, Se, Si, Sn, Sr, Ti, V, W, Y, Zn, Zr, or a combination thereof, and X is F, P, S, or a combination thereof.

[Chemical Formula 3A] Liₐ₃Feₓ₃M⁴_{y3}PO_{4-b3}X_{b3}

In Chemical Formula 3A, 0.9≤a3≤1.8, 0.6≤x3≤1, 0≤y3≤0.4, and 0≤b3≤0.1, M⁴ is Al, B, Ba, Ca, Ce, Co, Cr, Cu, Mg, Mn, Mo, Ni, Se, Si, Sn, Sr, Ti, V, W, Y, Zn, Zr, or a combination thereof, and X is F, P, S, or a combination thereof.

[Chemical Formula 4A] Liₐ₄Niₓ₄Mn_{y4}M⁵_{z4}O_{2-b4}X_{b4}

In Chemical Formula 4A, 0.9≤a2≤1.8, 0.8≤x4<1, 0<y4≤0.2, 0≤z4≤0.2, 0.9 ≤x4+y4+z4≤1.1, and 0≤b4≤0.1, M⁵ is Al, B, Ba, Ca, Ce, Cr, Fe, Mg, Mo, Nb, Si, Sn, Sr, Ti, V, W, Zr, or a combination thereof, and X is F, P, S, or a combination thereof.

The positive electrode active material may be in a form of particles, and an average particle diameter (D₅₀) of the positive electrode active material may be about 1 µm to about 25 µm, for example, about 3 µm to about 25 µm, about 1 µm to about 20 µm, about 1 µm to about 18 µm, about 3 µm to about 15 µm, or about 5 µm to about 15 µm. For example, the positive electrode active material may include small particles having an average particle diameter (D₅₀) of about 1 µm to about 9 µm and large particles having an average particle diameter (D₅₀) of about 10 µm to about 25 µm. The positive electrode active material having these particle diameter ranges may be well mixed with other components within the positive electrode active material layer and may provide high capacity and high energy density. Here, the average particle diameter may be obtained by randomly selecting about 20 particles from a scanning electron microscope image of the positive electrode active material, measuring their particle diameters (diameter, long diameter, or long axis length), obtaining a particle size distribution, and then taking the diameter (D₅₀) of particles having a cumulative volume of 50 vol% from the particle size distribution as the average particle diameter.

The positive electrode active material may be in a form of secondary particles formed by agglomerating a plurality of primary particles, or the positive electrode active material may be in a form of single particles. The positive electrode active material may have a spherical or near-spherical shape, or the positive electrode active material may have a polyhedral or irregular shape.

The positive electrode active material may include a buffer layer on the particle surfaces. The buffer layer may be expressed as a coating layer, a protective layer, and the like, and may play a role in lowering the interfacial resistance with the positive electrode active material. The buffer layer may include, for example, a lithium-metal-oxide, wherein the metal may be Al, B, Ca, Ce, Cr, Fe, Mg, Mo, Nb, Si, Sn, Sr, Ta, V, W, Zr, or a combination thereof. The lithium-metal-oxide may improve the performance of the positive electrode active material by facilitating the movement of lithium ions and electron conduction, while lowering the interfacial resistance with the positive electrode active material.

The positive electrode active material may be included in an amount of, for example, about 90 wt% to about 99 wt%, about 90 wt% to about 98 wt%, or about 93 wt% to about 96 wt%, based on 100 wt% of the positive electrode active material layer.

### Rechargeable Lithium Battery

Example embodiments provide a rechargeable lithium battery including a positive electrode including the aforementioned positive electrode active material, a negative electrode, and an electrolyte.

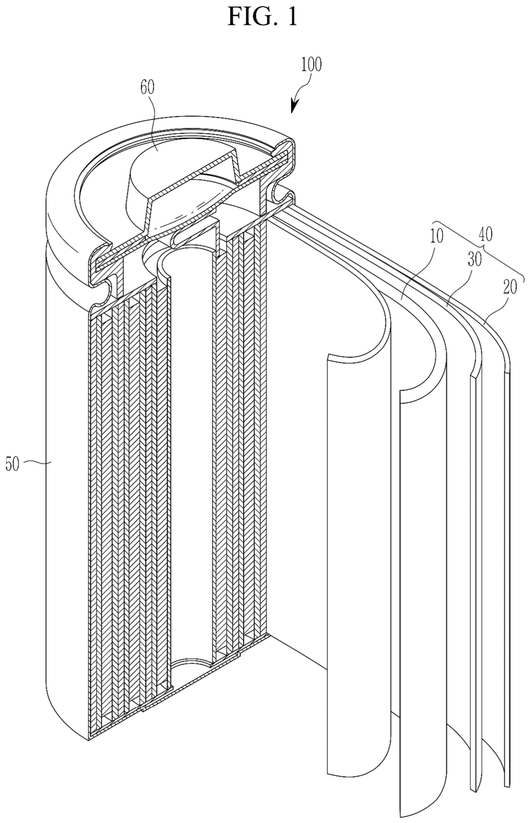

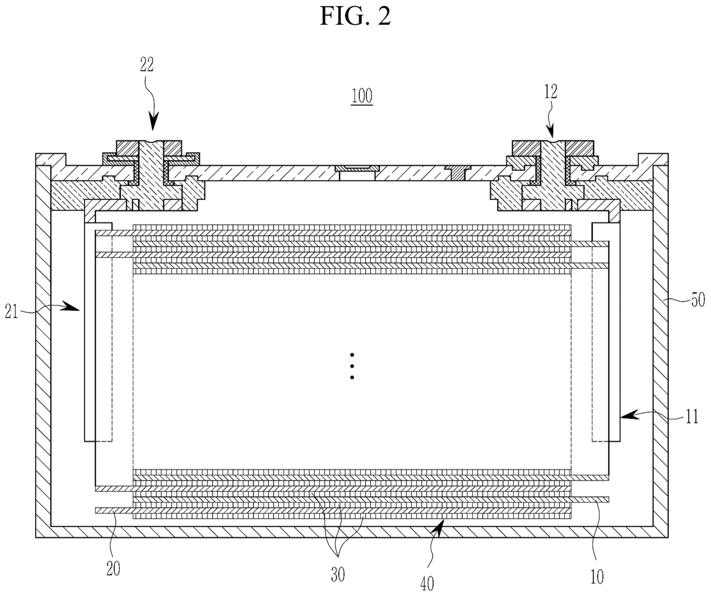

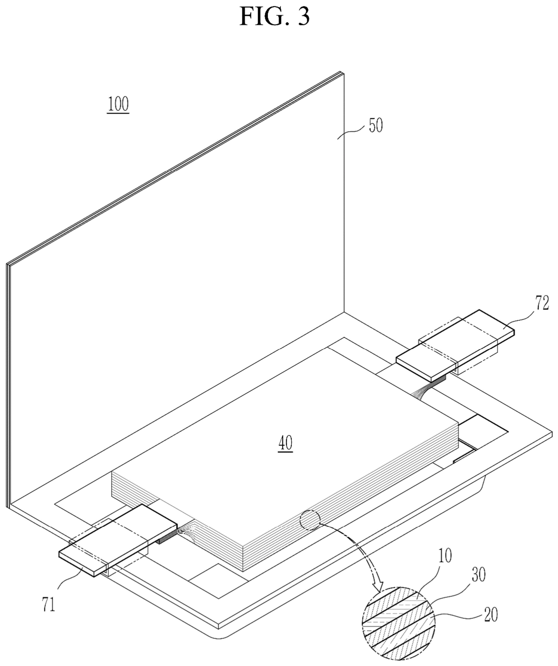

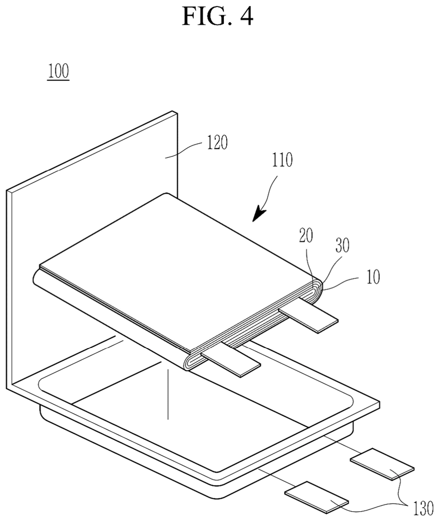

The rechargeable lithium battery may be cylindrical, prismatic, pouch, coin, etc. depending on its shape. FIGS. 1 to 4 are schematic views showing the rechargeable lithium batteries according to example embodiments, where FIG. 1 is a cylindrical battery, FIG. 2 is a prismatic battery, and FIGS. 3 and 4 are a pouch-shaped battery. Referring to FIGS. 1 to 4, a rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, as shown in FIG. 2, the rechargeable lithium battery 100 may include a positive electrode lead tab 11, a positive electrode terminal 12, a negative electrode lead tab 21, and a negative electrode terminal 22. As shown in FIGS. 3 and 4, the rechargeable lithium battery 100 includes an electrode tab 70, that is, a positive electrode tab 71 and a negative electrode tab 72 serving as an electrical path for inducing the current formed in the electrode assembly 40 to outside of the battery.

### Positive Electrode

The positive electrode includes a positive electrode current collector; and a positive electrode active material layer on the positive electrode current collector. The above-described positive electrode active material layer includes the aforementioned positive electrode active material, and may further include a binder, a conductive material, or a combination thereof in addition to the aforementioned positive electrode active material.

### Binder

The binder improves binding properties of positive electrode active material particles with one another and with a current collector. Examples of the binder include polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon. But the present disclosure is not limited to these examples.

### Conductive Material

The conductive material is included to provide electrode conductivity and any electrically conductive material may be used as a conductive material unless it causes an undesirable chemical change. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The amount of the binder and the conductive material may be about 0.5 wt% to about 5 wt%, based on 100 wt% of the positive electrode active material layer.

The positive electrode current collector may include Aluminum. But the present disclosure is not limited to aluminum.

### Negative Electrode

The negative electrode may include a current collector and a negative electrode active material layer on the current collector.

For example, the negative electrode active material layer may include a negative electrode active material, and may further include a binder, a conductive material, or a combination thereof in addition to the negative electrode active material.

### Negative Electrode Active Material

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, SiOₓ (0<x≤2), a Si-Q alloy, or a combination thereof.

In the formula Si-Q, Q is an element selected from an alkali metal, an alkaline-earth metal, a Group 13 element, a Group 14 element (excluding Si), a Group 15 element, a Group 16 element, a transition metal, a rare earth element, and a combination thereof, for example Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof. The Sn-based negative electrode active material may be Sn, SnO₂, a Sn alloy, or a combination thereof.

The silicon-carbon composite may be a composite of silicon and amorphous carbon. An average particle diameter (D₅₀) of the silicon-carbon composite particles may be, for example, about 0.5 µm to about 20 µm. According to some example embodiments, the silicon-carbon composite may be in the form of silicon particles and amorphous carbon coated on the surfaces of the silicon particles. For example, the silicon-carbon composite may include a secondary particle (core) in which silicon primary particles are assembled and an amorphous carbon coating layer (shell) on the surfaces of the secondary particles. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be artificial graphite, natural graphite, or a combination thereof. The amorphous carbon may include soft carbon or hard carbon, a mesophase pitch carbonized product, and calcined coke.

If the silicon-carbon composite includes silicon and amorphous carbon, an amount of silicon may be about 10 wt% to about 50 wt% and an amount of amorphous carbon may be about 50 wt% to about 90 wt% based on 100 wt% of the silicon-carbon composite. In addition, when the silicon-carbon composite includes silicon, amorphous carbon, and crystalline carbon, an amount of silicon may be about 10 wt% to about 50 wt%, an amount of crystalline carbon may be about 10 wt% to about 70 wt%, and an amount of amorphous carbon may be about 20 wt% to about 40 wt%, based on 100 wt% of the silicon-carbon composite.

A thickness of the amorphous carbon coating layer may be about 5 nm to about 100 nm. An average particle diameter (D₅₀) of the silicon particles (primary particles) may be about 10 nm to about 1 µm, or about 10 nm to about 200 nm. The silicon particles may exist as silicon alone, in the form of a silicon alloy, or in an oxidized form. The oxidized form of silicon may be represented by SiOₓ (0<x≤2). The atomic content ratio of Si:O, which indicates a degree of oxidation, may be about 99:1 to about 33:67. As used herein, when a definition is not otherwise provided, an average particle diameter (D₅₀) indicates a particle where a cumulative volume is about 50 volume% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio of about 1:99 to about 90:10.

### Binder

The binder functions to adhere the negative electrode active material particles to each other and also to adhere the negative electrode active material to the current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming a fiber, The dry binder may be, for example, polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity and any electrically conductive material may be used as a conductive material unless it causes an undesirable chemical change. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum silver, and the like; a conductive polymer such as a polyphenylene derivative; or a mixture thereof.

An amount of the negative electrode active material may be about 95 wt% to about 99.5 wt%, based on 100 wt% of the negative electrode active material layer. An amount of the binder may be about 0.5 wt% to about 5 wt%, based on 100 wt% of the negative electrode active material layer. For example, the negative electrode active material layer may include about 90 wt% to about 99 wt% of the negative electrode active material, about 0.5 wt% to about 5 wt% of the binder, and about 0.5 wt% to about 5 wt% of the conductive material.

### Negative Electrode Current Collector

The negative electrode current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be, for example, about 1 µm to about 20 µm, about 5 µm to about 15 µm, or about 7 µm to about 10 µm.

### Electrolyte

The electrolyte for a rechargeable lithium battery may be an electrolyte solution, which may include a non-aqueous organic solvent and a lithium salt.

The non-aqueous organic solvent serves as a medium for transmitting ions taking part in the electrochemical reaction of a battery. The non-aqueous organic solvent may be a carbonate-based, ester-based, ether-based, ketone-based, or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, t-butyl acetate, methyl propionate, ethyl propionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include ethanol, isopropyl alcohol, and the like and the aprotic solvent may include nitriles such as R-CN, wherein R is a C2 to C20 linear, branched, or cyclic hydrocarbon group, and may include a double bond, an aromatic ring, or an ether bond, and the like; amides such as dimethylformamide; dioxolanes such as 1,3-dioxolane, 1,4-dioxolane, and the like; sulfolanes, and the like.

The non-aqueous organic solvent may be used alone or in a mixture of two or more types. When two or more types are used in a mixture, a mixing ratio can be appropriately adjusted according to the desired battery performance, which is widely known to those working in the field.

When using a carbonate-based solvent, a cyclic carbonate and a chain carbonate may be mixed and used, and the cyclic carbonate and the chain carbonate may be mixed in a volume ratio of about 1:1 to about 1:9.

The non-aqueous organic solvent may further include an aromatic hydrocarbon-based organic solvent. For example, a carbonate-based solvent and an aromatic hydrocarbon-based organic solvent may be mixed and used in a volume ratio of about 1:1 to about 30:1.

The electrolyte solution may further include vinylethylene carbonate, vinylene carbonate, or an ethylene carbonate-based compound to improve battery cycle-life.

Examples of the ethylene carbonate-based compound include fluoroethylene carbonate, difluoroethylene carbonate, chloroethylene carbonate, dichloroethylene carbonate, bromoethylene carbonate, dibromoethylene carbonate, nitroethylene carbonate, cyanoethylene carbonate, and the like.

The lithium salt dissolved in the organic solvent supplies lithium ions in a battery, enables a basic operation of a rechargeable lithium battery, and improves transportation of the lithium ions between positive and negative electrodes. Examples of the lithium salt may include LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl)imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato) borate (LiBOB).

A concentration of lithium salt may be within the range of about 0.1 M to about 2.0 M. If the concentration of lithium salt is within this range, the electrolyte solution has appropriate ionic conductivity and viscosity, and thus excellent performance can be achieved and lithium ions can move effectively.

### Separator

Depending on the type of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be a polymer film formed of any a polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, TEFLON ^{®}, and polytetrafluoroethylene, or a copolymer or mixture of two or more thereof.

The porous substrate may have a thickness of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked.

The thickness of the coating layer may be about 0.5 µm to about 20 µm, for example, about 1 µm to about 10 µm, or about 1 µm to about 5 µm.

Examples and comparative examples of the present disclosure are described below. However, the present disclosure is not limited to the following examples.

### Example 1

### (1) Preparation of Recycled Lithium Carbonate

A waste liquid recovered from waste rechargeable lithium batteries and having a lithium amount of less than or equal to 0.5 wt% was obtained. After adjusting a solid concentration of the waste liquid to 5 wt%, to remove fine particles in the waste liquid the waste liquid was supplied to a pressure-reducing filtration device equipped with a paper filter with a pore size of size 1 µm and filtered under reduced pressure at a vacuum pressure of -0.07 Mpa at 25 °C. A filtrate with the fine particles removed was obtained through the reducing pressure filtration.

Under a vacuum pressure of -0.05 Mpa, which was lower than the above vacuum pressure, the filtrate was concentrated under reduced pressure at a temperature of 60 °C for 2 hours to prevent decomposition of heat-sensitive organic substances and impurities, thereby preparing a lithium-containing solution. The concentration under reduced pressure was performed until a lithium ion level reached about 2 mol/L. In order to ensure uniform concentration, continuous stirring was performed at 150 rpm.

Subsequently, while the lithium-containing solution obtained from the concentration under reduced pressure was maintained at 80 °C, Na₂CO₃ was slowly and continuously injected into the solution in a molar ratio of 2 equivalents to the lithium ions for about 20 minutes at about 50 mL/min, while inside of the reactor was continuously stirred at 200 rpm to prevent rapid concentration changes or local saturation. White precipitates of Li₂CO₃ were uniformly produced, and pH during the reaction was adjusted to be maintained at 10.5.

Subsequently, a composition from the completed precipitation reaction, which was maintained at 80 °C, while continuously stirring at 100 rpm, was constantly supplied at an inflow rate of 100 mL/min to a pressure-reducing filtration device equipped with a paper filter with a pore size of 1 µm by using a quantitative pump/ Then the solution was filtered a second time under reduced pressure. Specifically, the secondary filtration was performed at a vacuum pressure of -0.09 Mpa at 80 °C, with the composition being injected to the pressure-reducing filtration device was adjusted to maintain a solid content of 7 wt%.

As a result of the secondary filtration under reduced pressure, a solid content was recovered in the form of a cake, which had Li₂CO₃ precipitates as a primary component. The formed cake was adjusted to a thickness of 8 mm and took about 10 minutes to form. To prevent excessive stacking or uneven formation of the cake, the composition was comprehensively controlled with respect to a supply amount, a flow rate, and a vacuum level, wherein mechanical stability and subsequent washing efficiency of the cake were taken into consideration. Under such conditions, the filtration maintained stable efficiency, and the solid content was effectively recovered without a loss of the Li₂CO₃ precipitates.

The washing was performed by slowly spraying or wetting deionized (DI) water onto the surface of the recovered cake to secure sufficient penetration into the cake and remove reaction residues and water-soluble impurities. The deionized water used for the washing was maintained at 80 °C and injected at 5 mL/min, contact time of the deionized water with the cake was set to 3 minutes to ensure even penetration while preventing damage to the cake.

The cake completed with the washing was filtered under reduced pressure to remove residual moisture and then dried with hot air at 100 °C for 6 hours to obtain recycled Li₂CO₃. The drying was performed by setting a flow rate of the hot air to 2 m/s such that the drying air could uniformly pass over the specimen surface, and an exhaust fan was operated to ensure smooth vaporization of moisture and external ventilation during the drying. In addition, the drying was finished at a reference point where the residual moisture of the specimen was reduced to 1.0 wt% or less, which was confirmed by measuring its weight before and after the drying with a thermogravimetric analyzer.

### (2) Manufacturing of Positive Electrode Active Material

The obtained recycled Li₂CO₃ and Co₃O₄ were mixed to have a mole ratio of 1.05:1 between Li and Co by using a ball mill at a rotation speed of 200 rpm for 4 hours to prepare a mixed powder. The mixed powder was placed in an alumina crucible and fired at 500 °C for 5 hours to obtain a precursor. Subsequently, the primarily fired precursor was pulverized again, placed again in the alumina crucible, fired a second time at 850 °C under an oxygen atmosphere for 15 hours, and pulverized with a jet mill. LiCoO₂ was thereby obtain having an average particle diameter (D₅₀) of 10 µm.

### (3) Manufacturing of Rechargeable Lithium Battery Cell

94 wt% of the obtained LiCoO₂ as a positive electrode active material, 3 wt% of carbon black, and 3 wt% of polyvinylidene fluoride were mixed in NMP as a solvent to prepare a slurry for forming a positive electrode active material layer. The slurry for forming a positive electrode active material layer was coated on an about 15 µm-thick aluminum foil and then dried and roll-pressed to form a positive electrode active material layer. A positive electrode was thereby obtained.

The positive electrode was used with a Li metal counter electrode, a polytetrafluoroethylene separator, and an electrolyte solution prepared by mixing ethylene carbonate, ethylmethyl carbonate, and dimethyl carbonate in a volume ratio of 3:6:1 and dissolving 1.15 M LiPF₆ in the mixed solvent to make a coin cell-type half-cell according to a conventional method.

### Comparative Example 1

Recycled lithium carbonate, a positive electrode active material, and a rechargeable lithium battery cell were made in the same manner as in Example 1 except that, in preparing the recycled lithium carbonate, the washing was repeated three times, each washing being carried out under the same conditions as described in Example 1.

### Comparative Example 2

A recycled lithium carbonate, a positive electrode active material, and a rechargeable lithium battery cell were made in the same manner as in Example 1 except that Na₂CO₃ was injected three times more than in Example 1.

### Evaluation Example 1: SEM Evaluation

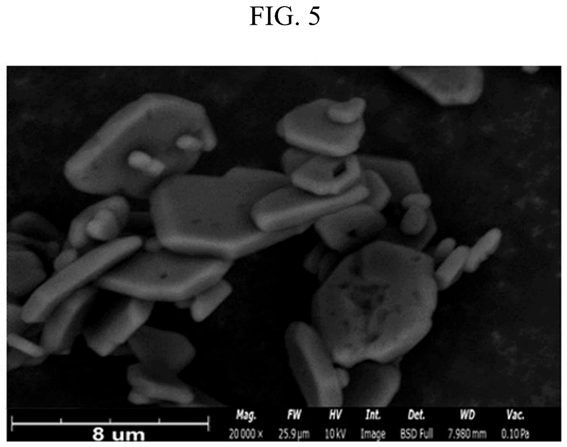

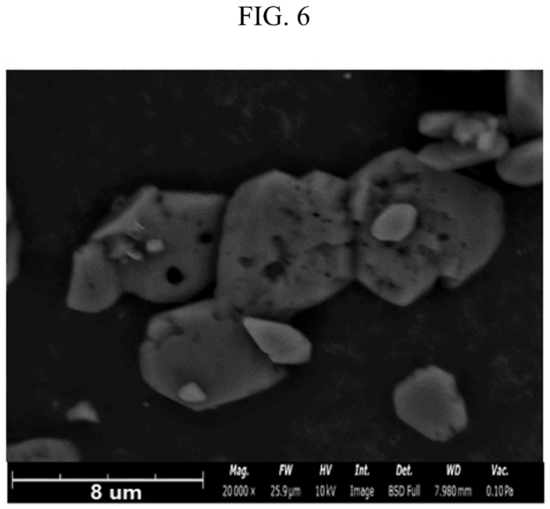

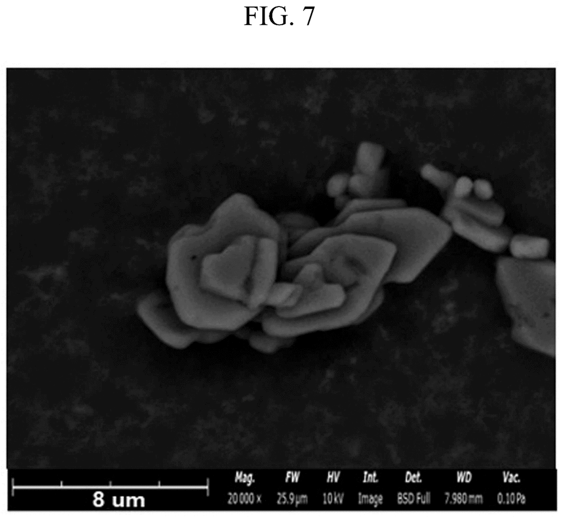

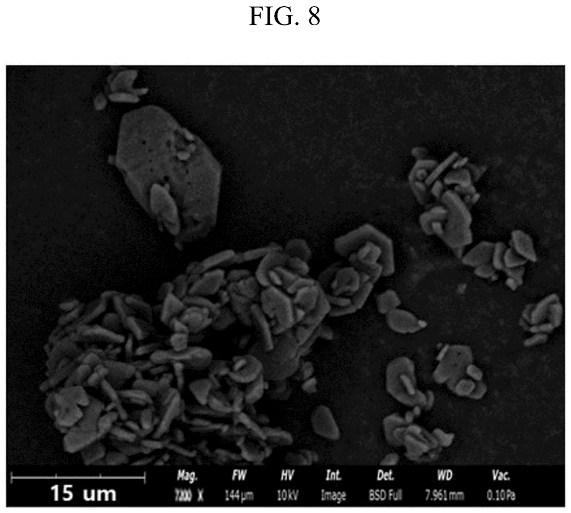

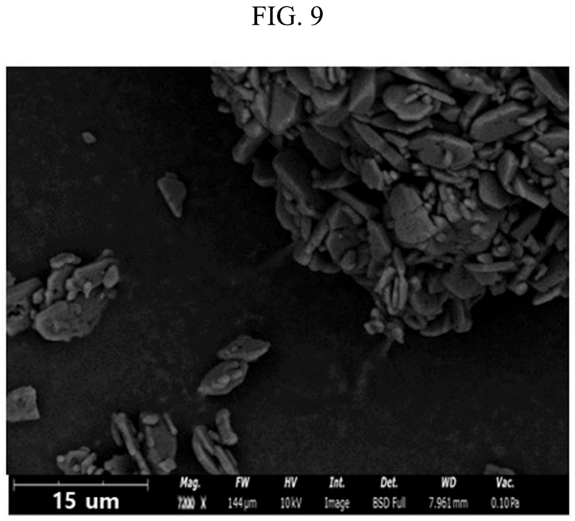

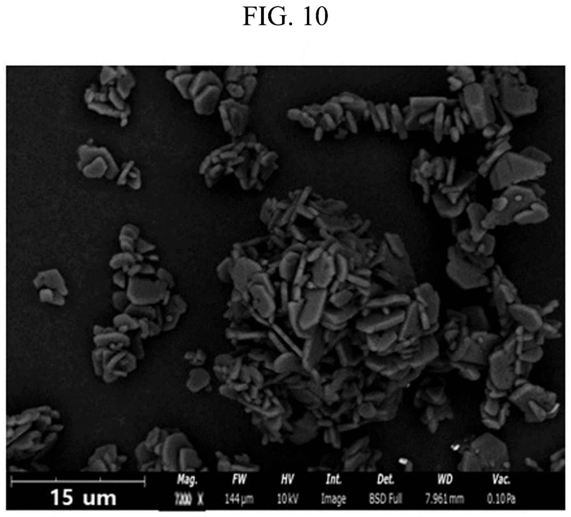

Scanning electron microscope images were taken of each of the recycled lithium carbonates according to Example 1 and Comparative Examples 1 and 2. The images of the recycled lithium carbonates of Example 1 and Comparative Examples 1 and 2 taken at a magnification of 20,000 are respectively shown in FIG. 5 to 7, and the images of the recycled lithium carbonates of Example 1 and Comparative Examples 1 and 2 taken at a magnification of 7,200 are respectively shown in FIGS. 8 to 10.

Referring to FIGS. 5 to 10, the obtained recycled lithium carbonates of Example 1 and Comparative Exampled 1 and 2 were confirmed to have plate-like particle shapes and an average particle diameter (D₅₀) within a range of 2 µm to 45 µm.

### Evaluation Example 2: ICP Component Analysis Evaluation

The recycled lithium carbonates obtained in Example 1 and Comparative Example 1 and 2 were prepared as specimens, which were pretreated with a mixed solution of HNO₃ and H₂O₂ and then subjected to ICP component analysis in an inductively coupled plasma-optical emission spectroscopic (ICP-OES) method using high frequency plasma by using an inductively coupled plasma-optical emission spectroscopic (ICP-OES) analyzer (5110 ICP-OES by Agilent Technologies). The results are shown in Table 1, where contents tof impurities are shown as wt%.

**Table 1**

| Content of impurities | Example 1 | Comparative Example 1 | Comparative Example 2 |
|---|---|---|---|
| Na (wt%) | 0.2046 | 0.0030 | 0.3133 |
| K (wt%) | 0.0024 | 0 | 0 |
| Ca (wt%) | 0.0156 | 0 | 0.0389 |
| Mg (wt%) | 0.0040 | 0.0100 | 0.0292 |
| Al (wt%) | 0.0001 | 0 | 0.0174 |
| Si (wt%) | 0.0040 | 0 | 0.0196 |
| Fe (wt%) | 0.0009 | 0 | 0.0298 |
| Total impurities (wt%) | 0.2316 | 0.0130 | 0.4482 |

Referring to Table 1, the recycled lithium carbonate of Example 1 was confirmed to have a total amount of impurities within a range of 0.1 wt% to 0.5 wt%, more specifically, 0.1 wt% to 0.4 wt%.

On the other hand, the recycled lithium carbonate of Comparative Example 1 had a lower total amount of impurities than that of Example 1, and the recycled lithium carbonate of Comparative Example 2 had a higher total amount of impurities than Example 1.

### Evaluation Example 3: Colorimetric System Evaluation

The recycled lithium carbonate samples obtained in Example 1 and Comparative Examples 1 and 2 were measured with respect to an L value and a b value according to a colorimetric system of CIELAB (CIE 1976 L*a*b*) by using a colorimeter (CR-400 by Konica Minolta) under conditions of illumination of D65 and an observation angle of 10 ° on the planarized sample surface with surface roughness (Ra) of 0.2 µm or less, and the results were shown in Table 2.

**Table 2**

| | L value | b value |
|---|---|---|
| Example 1 | 97.52 | 1.86 |
| Comparative Example 1 | 101 | 0.28 |
| Comparative Example 2 | 90.28 | 3.39 |

Referring to Table 2, Example 1 exhibited an L value within a range of 96.5 to 100.8 and a b value within a range of 0.2 to 3.0 according to the colorimetric system. On the other hand, Comparative Examples 1 and 2 were confirmed to exhibit at least one of the L value and the b value according to the colorimetric system out of the above range.

Referring to the ICP component analysis results of Evaluation Example 2, it was confirmed that the L value according to the colorimetric system tended to be inversely proportional to the total amount of impurities, while the b value according to the colorimetric system tended to be proportional the amount of Fe among the impurities.

### Evaluation Example 4: XRD Analysis Evaluation

The recycled lithium carbonate powders obtained in Example 1 and Comparative Examples 1 and 2 were respectively spread on a glass slide and mounted to be flat to perform XRD (X-ray diffraction) analysis by using an X-ray diffraction analyzer (SmartLab by Rigaku Corporation) with Cu-Kα radiation (λ = 1.5406 Å) under conditions of a voltage of 40 kV and a current of 30 mA over a range of 2θ = 10 ° to 70 ° with a step size of 0.02 ° at a scan speed of 2 °/min.

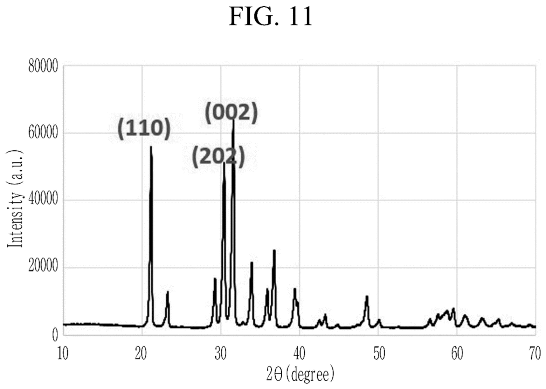

The XRD analysis result of Example 1 is shown in FIG. 11, wherein I₍₁₁₀₎ as peak intensity for the (110) plane was measured at 2θ= 21±0.5 °, I₍₂₀₂₎ as peak intensity for the (202) plane was measured at 2 θ = 30.5±0.4 °, and I₍₀₀₂₎ as peak intensity for the (002) plane measured at 2 θ = 31.5±0.5 ° were respectively measured through the XRD with CuKα and shown in Table 3.

**Table 3**

| | Peak intensity | | | Peak intensity ratio |
|---|---|---|---|---|
| | I₍₁₁₀₎ | I₍₀₀₂₎ | I₍₂₀₂₎ | I₍₀₀₂₎/I₍₁₁₀₎ |
| Example 1 | 56142 | 64126 | 51328 | 1.14 |
| Comparative Example 1 | 71373 | 86354 | 60203 | 1.21 |
| Comparative Example 2 | 47616 | 57941 | 43631 | 1.22 |

Referring to Table 3, Example 1 was confirmed to satisfy Equations 1 to 5.

### Evaluation Example 5: Battery Performance Evaluation

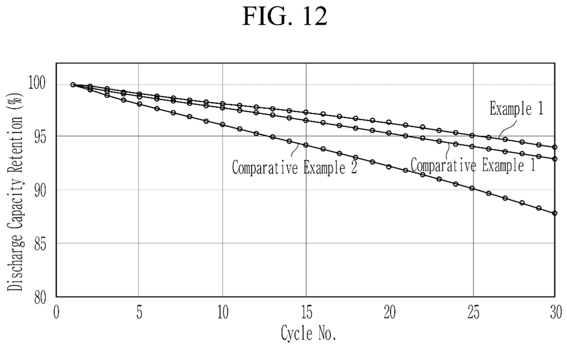

The rechargeable lithium battery cells according to Example 1 and Comparative Examples 1 and 2 were charged to an upper limit voltage of 4.56 V at a constant current (CC) of 0.35 C, after converting the constant current mode to a constant voltage (CV) mode, kept being charged to a current of 0.05 C, and then, discharged to a lower limit voltage of 3.00 V at the constant current 0.35 C at 45 °C, which was repeated for 30 cycles. A discharge capacity retention rate (%) according to the cycles was measured and is shown in FIG. 12.

Referring to FIG. 12, as compared to Comparative Examples 1 and 2, Example 1 exhibited excellent discharge capacity retention rate and excellent battery performance. In particular, referring to the results of Evaluation Example 2, it was confirmed that a low total amount of impurities did not always result in excellent performance, but too high an amount of impurities, as in Comparative Example 1 or too low an amount of impurities, as in Comparative Example 2, deteriorated the battery performance.

While this disclosure has been described in connection with what is presently considered to be practical example embodiments, it is to be understood that the disclosure is not limited to the embodiments. Rather, the disclosure includes various modifications and equivalent arrangements.

## Claims

1. A recycled lithium carbonate having: an L value of 96.5 to 100.8 according to a colorimetric system, and
a b value of 0.2 to 3.0 according to a colorimetric system.

2. The recycled lithium carbonate as claimed in claim 1, wherein the recycled lithium carbonate comprises impurities,
in a form of at least one of Na, K, Ca, Mg, Al, Si, and Fe.

3. The recycled lithium carbonate as claimed in claim 2, wherein based on the total weight of the recycled lithium carbonate a total amount of the impurities is 0.1 wt% to 0.5 wt%, preferably 0.1 wt% to 0.4 wt%.

4. The recycled lithium carbonate as claimed in any of claims 2-3, wherein the impurities comprise Na, and
wherein an amount of the Na is 0.005 wt% to 0.30 wt% based on the total weight of the recycled lithium carbonate.

5. The recycled lithium carbonate as claimed in any of claims 2-4, wherein the impurities comprise Fe, and
wherein an amount of the Fe is 0.0001 wt% to 0.005 wt% based on the total weight of the recycled lithium carbonate.

6. The recycled lithium carbonate as claimed in any of claims 2-5, wherein the impurities comprise Mg, and
wherein an amount of the Mg is 0.001 wt% to 0.03 wt% based on the total weight of the recycled lithium carbonate.

7. The recycled lithium carbonate as claimed in any of claims 2-6, wherein the impurities comprise Al, and
wherein an amount of the Al is 0.0001 wt% to 0.009 wt% based on the total weight of the recycled lithium carbonate.

8. The recycled lithium carbonate as claimed in any of claims 2-7, wherein the impurities comprise Si, and
wherein an amount of the Si is 0.001 wt% to 0.01 wt% based on the total weight of the recycled lithium carbonate.

9. The recycled lithium carbonate as claimed in any of the preceding claims, wherein the recycled lithium carbonate includes Na, Ca, Mg, Al, Fe, or a combination thereof as impurities,
wherein an amount of the Na is less than or equal to 0.30 wt% based on the total weight of the recycled lithium carbonate,
wherein an amount of the Ca is less than or equal to 0.05 wt% based on the total weight of the recycled lithium carbonate,
wherein an amount of the Mg is less than or equal to 0.03 wt% based on the total weight of the recycled lithium carbonate,
wherein an amount of the Al is less than or equal to 0.01 wt% based on the total weight of the recycled lithium carbonate, and
wherein an amount of the Fe is less than or equal to 0.005 wt% based on the total weight of the recycled lithium carbonate.

10. The recycled lithium carbonate as claimed in any of the preceding claims,
wherein the recycled lithium carbonate has a plate-like particle form.

11. The recycled lithium carbonate as claimed in any of the preceding claims, wherein an average particle diameter D₅₀ of the recycled lithium carbonate is 2 µm to 45 µm.

12. The recycled lithium carbonate as claimed in any of the preceding claims,
wherein the recycled lithium carbonate satisfies the equation: ${I}_{\left(110\right)} \leq {I}_{\left(002\right)}$
wherein:
I₍₁₁₀₎ is a maximum peak intensity measured at 2θ = 21±0.5° when measured by X-ray diffraction of CuKα, and
I₍₀₀₂₎ is a maximum peak intensity measured at 2θ = 31.5±0.5° when measured by X-ray diffraction of CuKα.

13. The recycled lithium carbonate as claimed in any of the preceding claims, wherein the recycled lithium carbonate satisfies at least one of the following equations i), ii), iii) and iv): ${I}_{\left(202\right)} \leq {I}_{\left(110\right)}$ (equation i) wherein:
I₍₂₀₂₎ is a maximum peak intensity measured at 2θ = 30.5±0.4° when measured by X-ray diffraction of CuKα, and
I₍₁₁₀₎ is a maximum peak intensity measured at 2θ = 21±0.5° when measured by X-ray diffraction of CuKα; ${I}_{\left(202\right)} \leq {I}_{\left(002\right)}$ (equation ii)
wherein:
I₍₂₀₂₎ is a maximum peak intensity measured at 2θ = 30.5±0.4° when measured by X-ray diffraction of CuKα, and
I₍₀₀₂₎ is a maximum peak intensity measured at 2θ = 31.5±0.5° when measured by X-ray diffraction of CuKα; ${I}_{\left(202\right)} \leq {I}_{\left(110\right)} \leq {I}_{\left(002\right)}$ (equation iii)
wherein:
I₍₂₀₂₎ is a maximum peak intensity measured at 2θ = 30.5±0.4° when measured by X-ray diffraction of CuKα,
I₍₁₁₀₎ is a maximum peak intensity measured at 2θ = 21±0.5° when measured by X-ray diffraction of CuKα, and
I₍₀₀₂₎ is a maximum peak intensity measured at 2θ = 31.5±0.5° when measured by X-ray diffraction of CuKα; and $1.0 \leq {I}_{\left(002\right)} / {I}_{\left(110\right)} \leq 1.17$ (equation iv)
wherein:
I₍₀₀₂₎ is a maximum peak intensity measured at 2θ = 31.5±0.5° when measured by X-ray diffraction of CuKα, and
I₍₁₁₀₎ is a maximum peak intensity measured at 2θ = 21±0.5° when measured by X-ray diffraction of CuKα.

14. A positive electrode active material prepared by using the recycled lithium carbonate as claimed in any of the preceding claims.

15. A rechargeable lithium battery comprising:
a positive electrode comprising the positive electrode active material as claimed in claim 14;
a negative electrode; and
an electrolyte.
